(19) Europäisches Patentamt
European Patent Office
Office européen des brevets

(11) Publication number: 0 194 690
A2

(12) # EUROPEAN PATENT APPLICATION

(21) Application number: 86103417.1

(22) Date of filing: 14.03.86

(51) Int. Cl.[4]: C 08 F 6/14

(30) Priority: 14.03.85 US 711832

(43) Date of publication of application: 17.09.86 Bulletin 86/38

(84) Designated Contracting States: DE FR GB IT NL

(71) Applicant: E.I. DU PONT DE NEMOURS AND COMPANY
1007 Market Street
Wilmington Delaware 19898(US)

(72) Inventor: Koppenol, Lambertus Huibregt
13, Rue Des Ecoles Pfaffenheim
F-68250 Rouffach(FR)

(72) Inventor: van Unnik, Gerardus Leonardus Hendrikus
Slingeland 12
Zevenbergen(NL)

(74) Representative: Abitz, Walter, Dr.-Ing. et al.
Abitz, Morf, Gritschneder, Freiherr von Wittgenstein
Postfach 86 01 09
D-8000 München 86(DE)

(54) **Process for separating surfactants from polymer residue in the manufacture of fluoropolymer dispersions.**

(57) A process for recovering the ammonium salt of a selected fluoroalkanoic acid and a selected hydrocarbyl oxyethoxylated polyether from an aqueous dross liquor obtained from the concentrated reaction mixture used to make polytetrafluoroethylene.

EP 0 194 690 A2

Croydon Printing Company Ltd

TITLE

# PROCESS FOR SEPARATING SURFACTANTS FROM POLYMER RESIDUE IN THE MANUFACTURE OF FLUOROPOLYMER DISPERSIONS

## FIELD OF THE INVENTION

This invention concerns a process for the recovery of surfactants of both the nonionic and anionic types from an aqueous dross liquor produced during the so-called "thermal concentration" of polytetrafluoroethylene (PTFE) polymer raw dispersion to increase polymer content.

## BACKGROUND OF THE INVENTION

The surfactants present in the aqueous dross liquor (usually called "supernate") can come from two sources. One source is the anionic surfactant or dispersant used during the polymerization of tetrafluoroethylene. This surfactant is an ammonium perfluoroalkanoate (called AMPFAk hereafter). A preferred surfactant of this type is ammonium perfluorooctanoate (AMPFO hereafter).

The second source is the surfactant used in concentrating the raw dispersion obtained from the polymerization. This surfactant is a nonionic one and is a hydrocarbyl oxyethoxylate. Subclasses are aliphatic alcohol ethoxylates and alkyl phenol ethoxylates. A preferred surfactant of this type is "Triton" X-100. These surfactants are sometimes generically called hydrocarbyl oxyethoxylated polyethers.

The raw dispersions are typically concentrated to 55-60 wt. % solids by a so-called "thermal concentration" process such as that described in U.S. Patent 3,037,953. The raw dispersion, typically containing from 35 to 45 wt % solids, is charged to a jacketed vessel capable of

being heated to temperatures below the boiling point of the dispersion. To the raw dispersion is added a nonionic surfactant of the hydrocarbyl oxyethoxylate type. Preferably, ammonium hydroxide is also added to render the dispersion alkaline (pH = 9 to 11) to accelerate the thermal concentration process and to resist later bacterial "souring" of the concentrated dispersion product.

The contents of the vessel after mixing are then heated to a temperature somewhat above the cloud point of the surfactant, and allowed to stand (unagitated) at this temperature until separation into two liquid layers is essentially complete. The nearly clear supernatant layer (hereinafter called "supernate") is then syphoned or decanted off, and the lower layer, consisting of a concentrated, colloidal dispersion of the polymer containing 55-60% solids by weight, is pumped to storage tanks from which it is withdrawn for subsequent packaging and commercial sale.

A preferred nonionic hydrocarbyl oxyethoxylated surfactant for use in the thermal concentration process is an alkyl phenol ethoxylate, namely, a t-octylphenol ethoxylate containing, on average, from 9 to 10 ethylene oxide units per molecule. Such a surfactant is commercially available as "Triton" X-100, sold by the Rohm & Haas Company. A suitable nonionic surfactant of the aliphatic alcohol ethoxylate type is "Tergitol" 15-S-9, sold by Union Carbide Corporation. This surfactant contains from 11 to 15 carbon atoms per molecule of aliphatic alcohol and, on average, 9 moles of ethylene oxide units per mole of alcohol.

The surfactants present in the supernate formed in the thermal concentration process are

intrinsically valuable, but their recovery is difficult because their concentrations in the supernate are relatively low, especially for the more valuable surfactant, AMPFAk. Furthermore, the surfactants consist of molecules having more-or-less distinct polar and non-polar portions, so that they tend to "bridge" ordinarily immiscible media such as might otherwise be used for their separation, as, for example, by liquid-liquid extraction. In addition, both surfactants have pronounced, and generally undesirable, foaming tendencies, especially in aqueous media.

Despite these difficulties, recovery of the surfactants is desirable because the disposal of the supernate by acceptable means is difficult. Ethoxylates, represented by "Triton" X-100, though considered biodegradable, degrade only slowly, even by bacteria acclimated to feeding upon it, and AMPFO is not biodegradable, nor is PTFE. The foaming tendency of the supernate can also pose troublesome problems in its disposal.

A known method for recovering "Triton" X-100 from dilute aqueous solutions in the concentration range typical of that found in supernate is to take advantage of the "inverse" solubility--temperature relationship, found in the "Triton"--water system. Thus, such solutions, homogeneous at room temperature, can simply be heated to temperatures between the cloud (ca. 70°C) and normal boiling point (ca. 100°C) to effect a separation into two liquid phases, one rich in "Triton" and the other poor in "Triton". However, the basic effect of AMPFAk on the "Triton"--$H_2O$ system is to promote compatibilization of these components; i.e., to increase their miscibility. Thus, the effect of the presence of

AMPFAk is to increase both the solubility of water in the "Triton"-rich phase, and the solubility of "Triton" in the water-rich phase; the cloud point (the temperature at which miscibility becomes limited) is raised as a result. AMPFAk, at the concentration level at which it is normally present in supernate, prevents a phase separation from being obtained by simply heating the supernate to a temperature up to as much as about 10 to 20°C above that used in the thermal concentration of PTFE dispersion (but below the normal boiling point of the supernate).

Another limitation of this "thermal" phase-separation method is that, in the case where AMPFO (or its corresponding acid, usually designated C-8 acid) is present, the fluorosurfactant does not become well separated from the nonionic surfactant, even if phase separation does occur. On the contrary, the usual tendency is for the majority of the fluorosurfactant present to remain in the phase which is richer in the nonionic surfactant.

Various other recovery procedures have been devised. The use of ion-exchange for the recovery of fluorinated surfactants from aqueous media has been disclosed in the patent literature, as, for example, in U.S. Patent 3,882,153, and more recently in U.S. Patent 4,282,162. However, the treatment of the above-described supernate by ion exchange, using the same resin ("Lewatit" MP-62, a weakly basic anion exchanger sold commercially by Bayer AG) predominantly employed in the Examples of U.S. 4,282,162, and following the absorption and elution procedures of that patent (using an aqueous HCl/n-propanol mixture for elution), did not produce satisfactory long-term results. The ion-exchange

resin on repeated use rapidly lost its capacity for AMPFO, so that after five cycles of use it retained only a small fraction of its initial capacity. The cause of this drop-off could not be readily ascertained. In addition to this major deficiency in performance, the ion-exchange resin is relatively expensive unless it can be reused many times, and the overall procedure is cumbersome for practical application. With the nonionic surfactant present, extensive washing and rinsing of the resin is necessary for its removal. Furthermore, the presence of the dispersed PTFE in supernate is also a potential source of fouling of the ion-exchange resin, and the other anionic components (besides AMPFO) present may be capable of reducing its exchange capacity for AMPFO.

It is desirable to provide a process for recovery of the surfactants discussed above that employs common, inexpensive inorganic reagents and a simple organic solvent, thereby avoiding the complexity of such techniques as ion exchange for effecting the separation of the surfactants, which overcomes foaming by appropriate choices of media and conditions, especially of pH level and which can be carried out at atmospheric pressure, and at ambient temperature.

## SUMMARY OF THE INVENTION

A process for recovering the ammonium or alkali metal salt of a fluoroalkanoic acid having the general formula

$$X\text{-}R_f\text{-}COOH$$

wherein $R_f$ is a saturated perfluorinated linear or methyl branched alkylene group containing 5 to 10 carbon atoms, and X is a member of the class consisting of hydrogen, fluorine or chlorine, and a

hydrocarbyl oxyethoxylated polyether having the general formula:

$$R(O - CH_2-CH_2)_yOH$$

where R is a primary or secondary alkyl group of 11-18 carbon atoms or 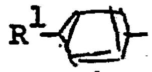 where $R^1$ is a primary, secondary or tertiary alkyl group containing 8 to 12 carbon atoms, and y is a cardinal number of from 8 to 14, from an aqueous dross liquor containing both obtained from the aqueous polymerization of tetrafluoroethylene, which comprises:

extracting the salt (in the form of its corresponding acid) and the ethoxylated compound from an acidified said aqueous dross liquor by agitating the acidified aqueous dross liquor with an organic liquid selected from dichloromethane or trichloromethane, collecting polytetrafluoroethylene that precipitates, and separating the organic liquid layer from the aqueous layer.

DESCRIPTION OF THE INVENTION

Both the ionic and nonionic surfactants are isolated from an aqueous dross liquor (this dross will be referred to hereafter as "supernate") by extracting them from the aqueous supernate into an organic liquid; residual PTFE in the supernate is precipitate during the extraction and is collected. The organic liquid is then evaporated to obtain the surfactants.

Supernate obtained from the PTFE dispersion concentration method described in the BACKGROUND section is acidified to a low pH, e.g. below 7, preferably to about 1-2, with an aqueous mineral acid (preferably sulfuric acid), and then agitated at room temperature for a short time in the presence of tri- or dichloromethane organic liquid. The addition of the mineral acid converts the anionic surfactant (AMPFAk) from its ammonium salt to the corresponding

carboxylic acid (perfluorooctanoic acid is representative and it is called "C-8" hereafter). Under these conditions, the PTFE present coagulates to form a non-dispersed solid phase, and the great bulk of both the nonionic and anionic surfactants is transferred into the organic phase. Separation of the two liquid phases is relatively sharp, and no foaming problem is encountered. Preferably, a second extraction is performed, conveniently using the same amount of organic liquid as before, on the aqueous layer after separation of the phases has been effected. The concentrations of both surfactants remaining in the aqueous phase after this second extraction are extremely low. After removal of dissolved, volatile organic liquid from the aqueous phase (where its concentration is only about 2 wt percent) by simple distillation (with the recovered organic liquid in the distillate being available for re-use in extraction) the aqueous layer, after neutralization with an appropriate reagent such as sodium hydroxide, lime, or limestone, can easily be disposed of. Alternatively, the neutralization may be carried out prior to distillation. If desired, the organic liquid in the aqueous phase can also be recovered by "salting out" at room temperature, through saturation of this phase with sodium chloride or the like.

The coagulated PTFE, which tends to collect at the liquid-liquid interface after the first extraction, settles out almost completely in the organic phase after the second extraction. It can readily be removed from this phase by filtration, or simply by collection on a fine-mesh screen.

If the supernate is not acidified prior to extraction, emulsification tends to occur, and the

foaming tendency remains high. Furthermore, the PTFE does not coagulate on extraction.

Trichloromethane can be used instead of dichloromethane as extracting agent, and is about equally effective. Both these extractants are essentially non-flammable. Although trichloromethane has some advantages over dichloromethane in having lower mutual solubility in and for water, and in being less volatile at room temperature, dichloromethane is preferred because it has a ten-fold higher Allowable Exposure Limit, as prescribed by the American Conference of Governmental and Industrial Hygienists.

It is well known that, by appropriate design of process vessels and exhaust ducts, vapors evolved by dichloromethane (or trichloromethane) during the operation of processes in which these compounds are used can be conducted to beds of activated carbon for trapping, and, if desired, subsequent recovery.

Surprisingly, it was found that use of dichloromethane to extract perfluorooctanoic acid (C-8) from the mixture obtained when sulfuric acid was added to a solution of AMPFO in water (i.e., with no "Triton" present) was not effective. When shaken, the contents of the separatory funnel in which the extraction was carried out became very foamy, filling the funnel completely, even though the total liquid volume initially charged (aqueous phase, plus 20% by volume $CH_2Cl_2$) was less than one quarter the empty volume of the funnel. Titration (with standard NaOH solution) of the upper (aqueous) and lower (organic) layers obtained after a 20-minute standing period indicated that the C-8 acid had by no means been effectively removed from the aqueous phase.

Also surprisingly, the halocarbon liquid 1,1,2-trichloro-1,2,2-trifluoroethane (FREON® 113) was not found suitable as an extractive agent for supernate, whether the latter was in either an alkaline or acidic condition. The major advantages of excellent separation with little or no foam formation provided by the dichloromethane and trichloromethane extractants were found lacking with the chlorofluorocarbon compound.

While AMPFO is essentially insoluble in an aromatic liquid such as toluene at ordinary temperatures, whereas "Triton" X-100 is miscible in all proportions with toluene, attempts to separate solutions of AMPFO in "Triton" X-100 by addition of toluene were found unavailing. The same was true when the AMPFO was present in the form of its corresponding acid, C-8, (through mineral acid addition), rather than the ammonium salt.

To separate the organic liquid from the surfactants, the organic liquid can simply be evaporated.

Advantages of this extraction method (over the "thermal" phase-separation method) of separating the non-ionic ethoxylated surfactant and the AMPFAk from (acidified) supernate are as follows:

1. The concentration of residual ethoxylated surfactant in the aqueous phase is significantly lower when extraction (especially the preferred two-step extraction) is used. Furthermore, when AMPFAk is present, its effect in the "thermal" method is to increase this concentration of residual ethoxylated surfactant in the aqueous phase. While this solubilizing effect can be offset by addition of electrolytes such as sodium chloride, the aqueous effluent to be disposed of then contains an additional component.

2. The extraction method effects a coagulation of the PTFE solids dispersed in supernate, thereby facilitating their easy removal. With the "thermal" method, this PTFE remains dispersed.

3. The extraction method can conveniently be carried out at room temperature.

4. Presence of AMPFAk prevents use of the usual phase-separation procedure used to isolate the ethoxylated surfactant from water.

It is understood that the term PTFE as used herein means homopolymers and copolymers where very minor amounts of comonomer units can be present so long as they do not change the physical characteristics of the PTFE.

ANALYTICAL METHODS

Analytical methods used in the Examples consisted of the following:

For AMPFO, a modification of the colorimetric extractive procedure for analysis of anionic surfactants, as described in the "Encyclopedia of Industrial Chemical Analysis", Vol. 1, pp. 339-40, Interscience Publishers, New York, NY (1971), was used. The method involves the use of a cationic blue dye (such as methylene blue or Azure A) to form an extractable blue complex which has an absorbance peak in the visible region at about 635 nm. Appropriate sample dilutions were used to obtain peak absorbance values in the range between 0 and 1, and "blank" corrections were applied. At low to moderate ratios of "Triton" X-100 to AMPFO, the "Triton" X-100 nonionic surfactant gives little or no interference. To analyze samples in which higher ratios were present, the sample was first steam distilled at atmospheric pressure in the presence of

dilute aqueous phosphoric acid. The acid converts the AMPFO to its corresponding acid, C-8, which steam distills away from the "Triton" X-100 and can be measured in the distillate by the colorimetric procedure. Traces of "Triton" X-100 in the distillate do not interfere. Distillation was continued until the level of AMPFO coming over was insignificant.

For "Triton" X-100 in aqueous solution, analyses were performed by measurement of peak absorbance in the ultraviolet region at a wavelength of about 275 nm. Appropriate dilutions were used to bring the peak absorbance values into the 0-1 range, using 1-cm path length.

Samples which contained dichloromethane were purged of this solvent by evaporation into a stream of nitrogen gas prior to analysis or to steam distillation.

Acid-base titrations were made using either phenolphthalein or screened methyl orange as indicators, or by potentiometric (pH) measurement when appropriate.

## EXAMPLE

In the Example which follows, all proportions are expressed on a weight basis, unless otherwise specified. Concentrations of the AMPFO fluorosurfactant are expressed in terms of equivalent AMPFO, whether this compound is present in any given stage of the overall recovery process as the ammonium salt or as the corresponding acid (1 g AMPFO = 414/431 = 0.961 g $C_7F_{15}COOH$).

Into a Squibb-type, glass separatory funnel having a nominal capacity of 3000 ml (actual capacity of 4300 ml) was placed, at room temperature, 2000 ml (2.006 kg) of supernate which had been decanted after

commercial-scale thermal concentration of raw PTFE dispersion. The supernate contained 5.92 wt. % "Triton" X-100 and 0.212 wt. % of AMPFO, and sufficient ammonium hydroxide to give a pH between 9 and 10. 18 ml (25 g) of 50 wt. % aqueous $H_2SO_4$ was added, followed by 400 ml (529 g) of reagent-grade dichloromethane. The mixture in the funnel was shaken vigorously by hand for about one minute. The amount of foaming which occurred on shaking was negligible. After about a one-half hour settling period, the lower (organic) layer (440 ml; ca. 560 g) was withdrawn, followed by a small interfacial layer consisting of a slurry (16 ml) of coagulated PTFE polymer in the organic phase. The upper (aqueous) layer (ca. 1988 ml) was found to contain only 0.0076 wt % (76 ppm) of "Triton" X-100 and only 0.0022 wt. % (22 ppm) of (equivalent) AMPFO. The (equivalent) AMPFO content of the organic layer was found to be a 0.75 wt. %.

The aqueous residue was then extracted in a similar manner with a second 400 ml portion of dichloromethane at room temperature. The lower layer withdrawn after the extraction (372 ml; 490 g) had an (equivalent) AMPFO content of 0.060 wt. %. The upper layer had a volume of about 1986 ml and contained only 8 ppm and only 20 ppm of "Triton" X-100 and (equivalent) AMPFO, respectively. By distillation and condensation, the dichloromethane content of this layer was found to be about 1.6 wt. %. The acid content of this layer was found by titration with sodium hydroxide to a phenolphthalein endpoint to be about 0.06 g-equivalents per liter.

The low concentrations of "Triton" X-100 and APFO in the aqueous layer after either extraction show that both of these components can be removed to

the extent of 99% or more from supernate by extraction.

In subsequent experiments on the same scale the interfacial layer was not withdrawn after the first extraction. Instead, by waiting until the second extraction was complete, virtually all of the coagulated PTFE settled to the bottom of the lower layer, and was thus readily withdrawn first from the separatory funnel. In addition, subsequent experiments on the same scale in which fresh portions of supernate were successively extracted with fresh portions of dichloromethane without cleaning the funnel between extractions showed that the fraction of the total extracted "Triton" X-100 and C-8 acid lost as a residue held on the walls of the funnel became significantly less than in a single double-extraction test. (This residue could, of course, also be removed by rinsing of the funnel with fresh dichloromethane after extraction, at the expense of (slight) dilution of the extracts.)

The coagulated PTFE recovered from the extraction step was easily removed from its slurry in dichloromethane by straining through a fine metal screen. While the level of dispersed PTFE in supernate tends to be variable depending on thermal concentration performance, it typically amounts to only 0.1 to 0.5 wt %.

The dichloromethane can be separated from the surfactants, if desired, by evaporating it.

Very similar results were obtained in smaller-scale tests in which trichloromethane was used instead of dichloromethane as extractant.

Claims:

1. A process for recovering the ammonium salt of a fluoroalkanoic acid having the general formula

$$X-R_f-COOH$$

wherein $R_f$ is a saturated perfluorinated linear or methyl branched alkylene group containing 5 to 10 carbon atoms, and X is a member of the class consisting of hydrogen, fluorine or chlorine, and a hydrocarbyl oxyethoxylated polyether having the general formula:

$$R(O-CH_2-CH_2)_yOH$$

where R is a primary or secondary alkyl group of 11-18 carbon atoms or 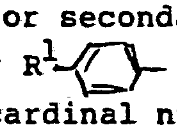 where $R^1$ is a primary, and y is a cardinal number of from 8 to 14, from an aqueous dross liquor containing both obtained from the aqueous polymerization of tetrafluoroethylene, which comprises:

extracting the ammonium salt (in the form of its corresponding acid) and the ethoxylated compound from an acidified said aqueous dross liquor by agitating the acidified aqueous dross liquor with an organic liquid selected from dichloromethane or trichloromethane, collecting polytetrafluoroethylene that precipitates, and separating the organic liquid layer from the aqueous layer.